# EUROPEAN PATENT SPECIFICATION

(11) **EP 0 986 136 B1**
(45) Date of publication and mention of the grant of the patent: **14.12.2005**
(21) Application number: 99115553.2
(22) Date of filing: 06.08.1999
(51) Int. Cl.: H01H 71/02, H01R 13/639, H01R 9/26

(54) **Safety connection device, particularly for modular electrical devices**
Sicherheitsverbindungsvorrichtung, insbesondere für modulare elektrische Geräte
Dispositif de liaison de sécurité en particulier pour appareils électriques modulaires

(30) Priority: 08.09.1998 IT MI981976
(43) Date of publication of application: 15.03.2000
(73) Proprietor: GEWISS S.p.A., I-24069 Cenate Sotto (Bergamo) (IT)
(72) Inventor: Bosatelli, Domenico, 24069 Cenate Sotto (Bergamo) (IT); Pianezzola, Sergio, 21100 Calcinate del Pesce (Varese) (IT); Contardi, Augusto, 21100 Varese (IT)
(74) Representative: Forattini, Amelia

(56) References cited:
- EP-A- 0 375 568
- EP-A- 0 626 711
- EP-A- 0 717 425

## Description

The present invention relates to a safety connection device particularly for modular electrical devices.

More particularly, the present invention relates to the system for mutually connecting two or more modular electrical devices constituted by at least one residual-current actuator and one circuit breaker.

It is known that the connection between a residual-current actuator and a circuit breaker when installed must comply with specific safety standards which essentially prescribe that the mutual assembly and electrical connection of the two components must be irreversible and that any attempt to separate them must be evident. The mechanical coupling means must also be rigidly coupled to one of the components and must be nondetachable. Finally, the electrical connection terminals must be integral to the residual-current module and must be protected.

Various coupling systems are known which are capable of complying with the above standards with varying degrees of efficiency. However, the need has been felt to improve the systems currently in use both from the point of view of production and from the point of view of ease and speed of installation.

Document EP-A-0626711 discloses a safety connection device according to the preamble of claim 1.

The aim of the present invention is indeed to provide a safety connection device which has improved functionality with respect to the prior art.

An object of the invention is to provide a safety connection device which allows faster and easier installation of the modules.

Another object is to provide a safety connection device which is economically advantageous from the point of view of production.

This aim, these objects and others which will become apparent hereinafter are achieved by a safety connection device, as claimed in the appended claims.

Further characteristics and advantages will become apparent from the description of a preferred but not exclusive embodiment of the invention, illustrated only by way of non-limitative example in the accompanying drawings, wherein:
FIG. 1 is a perspective view of two modules provided with the device according to the invention and shown uncoupled;

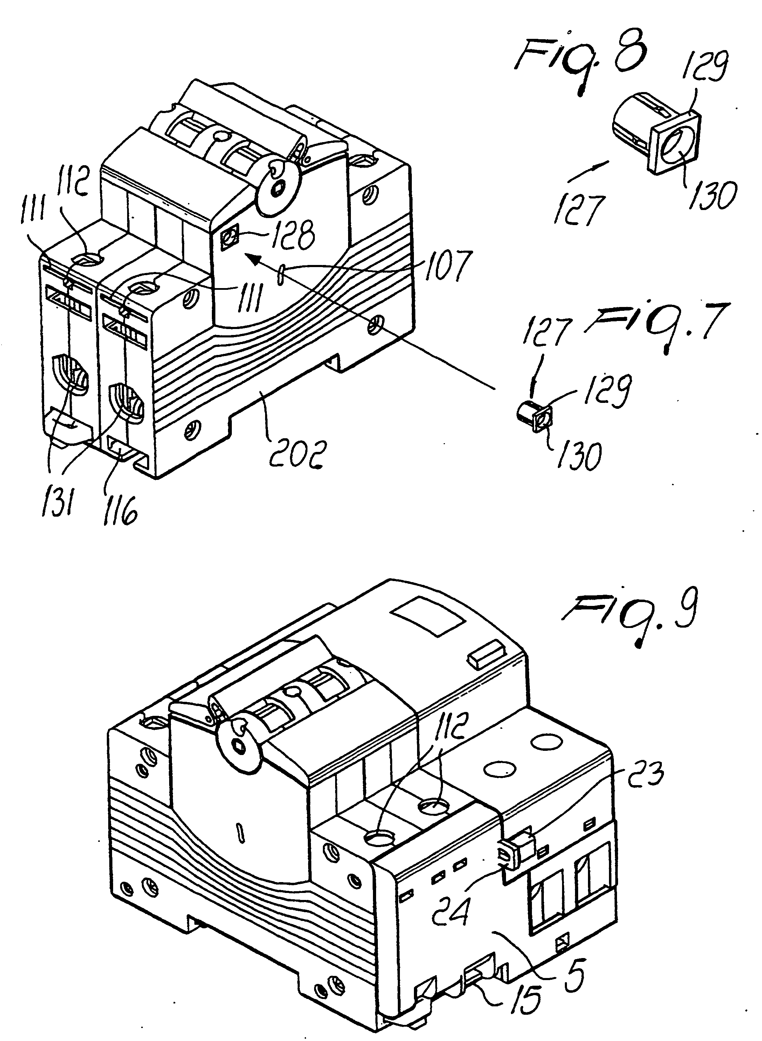

FIG. 2 is a view, similar to FIG. 1, in which the residual-current module is shown without the cover of the device;
FIG. 3 is a perspective view, taken from below, of the residual-current module with the cover still in the open position before assembly;
FIG. 4 is a view which is similar to FIG. 3 but shows the cover in the closed position;
FIG. 5 is a partial sectional view of the residual-current module with the cover still in the open position before assembly;
FIG. 6 is a view which is similar to FIG. 5 but shows the cover in the closed position;
FIG. 7 is a perspective view of a circuit breaker module which shows, in an exploded view, the shaped component of the device according to the invention;
FIG. 8 is an enlarged-scale perspective view of the shaped component;
FIG. 9 is a perspective view of two modules provided with the device according to the invention, shown in the coupled condition;
FIG. 10 is a partial perspective view of the hook means of the device according to the invention, shown in the open position;
FIG. 11 is a view which is similar to FIG. 10 but shows the hook means during closure;
FIG. 12 is a view which is similar to FIG. 11 but shows the hook means in the closed position.

With reference to the above figures, the safety connection device can be applied to at least two modular electrical devices which typically include a residual-current actuator 1 which can be coupled to a circuit breaker 101. The electrical devices that can be coupled can of course also be more than two, according to the specific requirements of the system.

The first modular component, for example a residual-current actuator 1, includes a rear surface 3 which has a means for anchoring to a standard supporting rail and a lateral surface 2 which can be coupled to the lateral surface 202 of the second modular component 101.

The first modular component 1 includes a pin 6 which protrudes from a slot 7 and is adapted to enter a corresponding slot 107 of the second modular component 101, so as to provide the mechanical and operational connection between the two modular components 1 and 101 when they are juxtaposed.

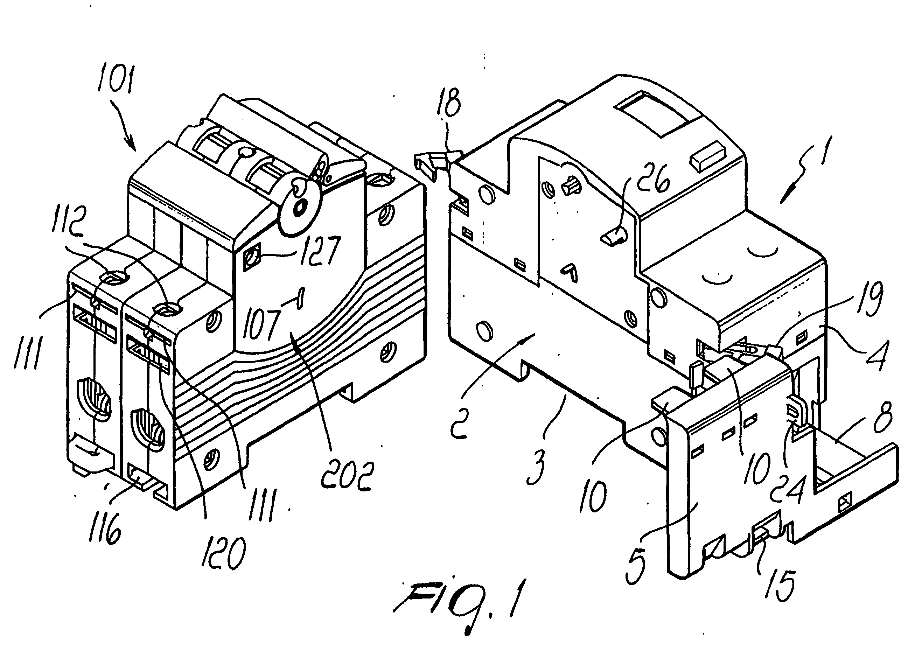

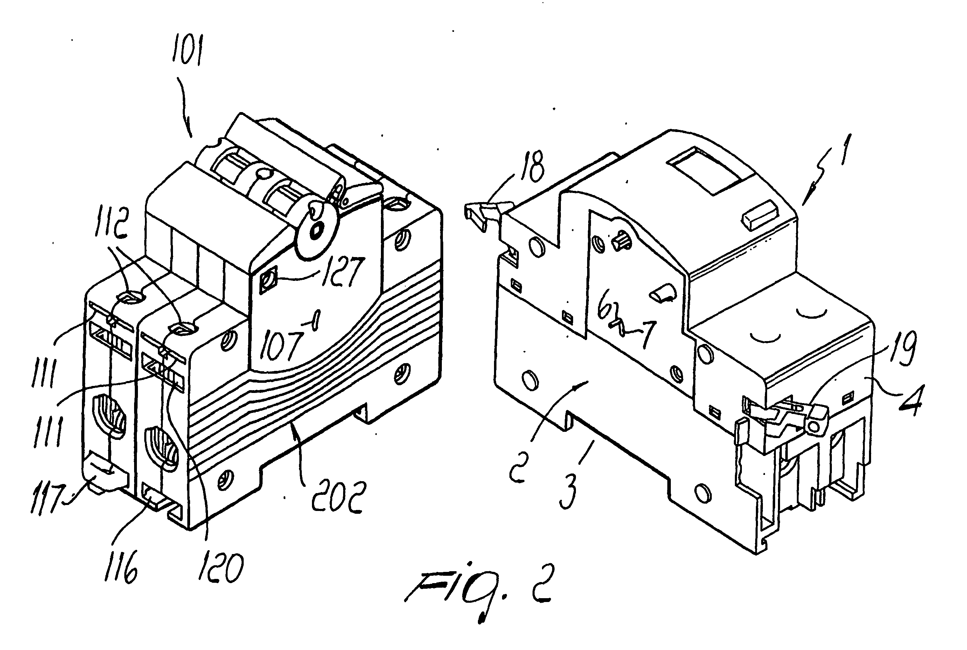

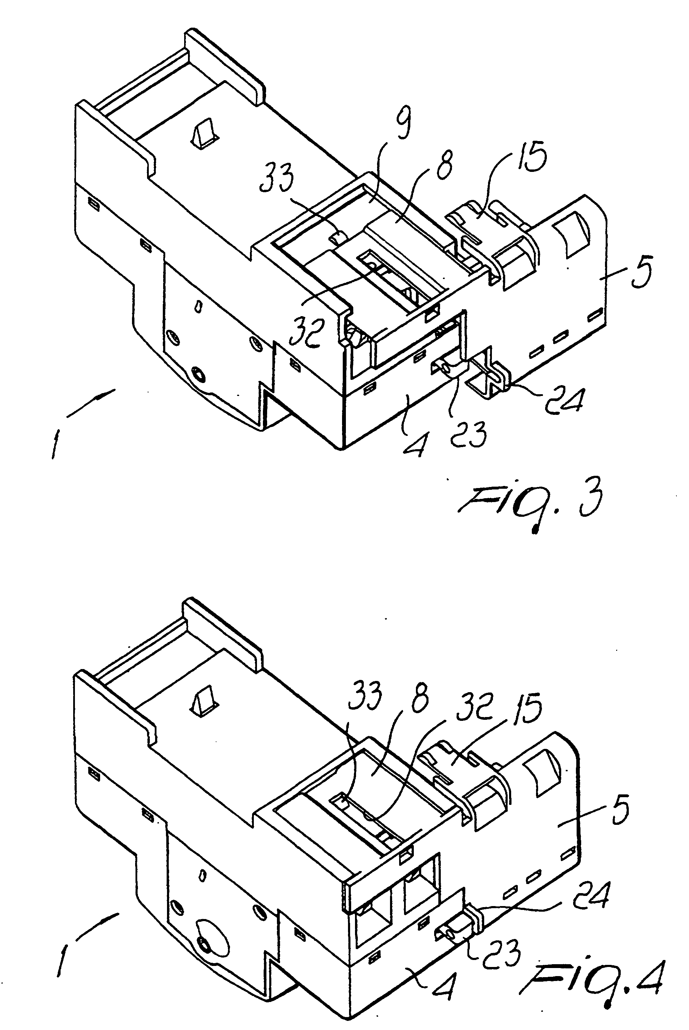

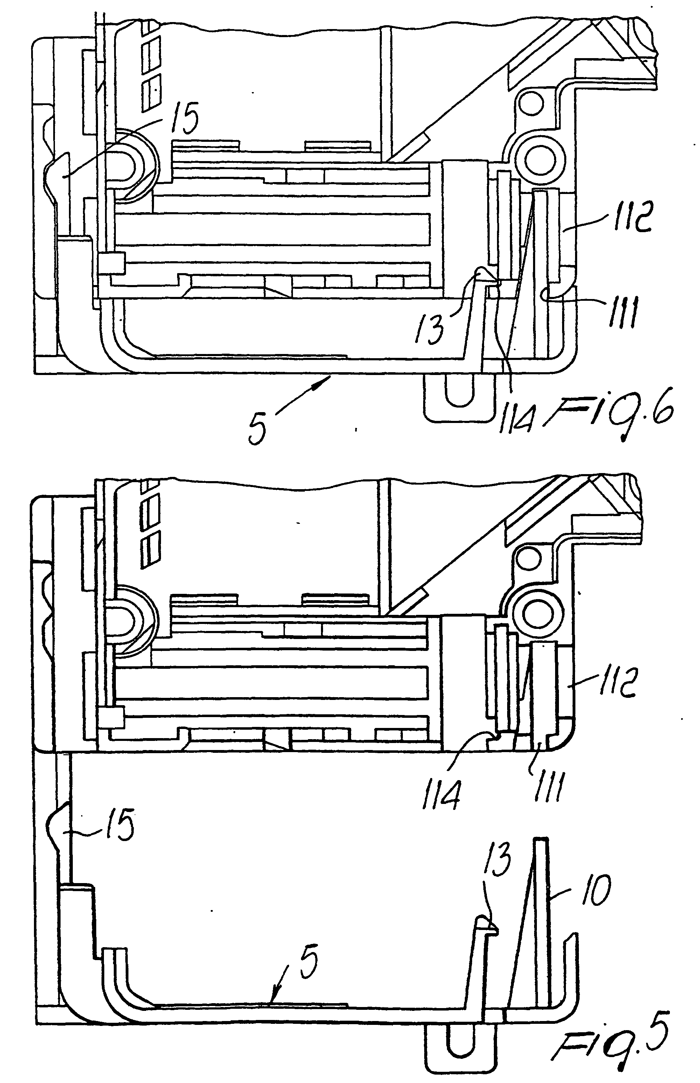

As mentioned, the standards prescribe that once the connection between the two modular components has been provided, it should not be possible to disconnect it without the tampering being evident. For this purpose, the first modular component 1 includes a cover 5 which is rigidly coupled to the transverse surface 4 by means of a first engagement means which includes a sliding member 8 which is monolithic with the cover 5 and is adapted to slidingly enter a longitudinal seat 9 formed in the body of the first modular component 1. The cover 5 determines, together with the first modular component 1, at least two extreme positions: an open position (shown in FIGS. 1, 3 and 5), in which the cover is spaced from the transverse surface 4, and a closed position (shown in FIGS. 4, 6 and 9), in which the cover 5 abuts against the transverse surface 4. The sliding member 8 has a longitudinal slot 32 which can be engaged by a protrusion 33 which is rigidly coupled to the body of the first modular component 1 at least in the closed position of the cover 5.

A second engagement means is provided in order to fix the cover 5 to the second modular component 101 and includes two plates 10 which are monolithic with the cover 5 and are adapted to enter corresponding seats or slits 111 formed in the body of the second modular component at cylindrical seats 112 which are in turn formed in the body of the second modular component 101 in order to accommodate respective terminals in a per se known manner.

The second engagement means also includes teeth 13 adapted to engage corresponding engagement sets 114 formed in the body of the second modular component 101 so that once they are engaged the teeth 13 can no longer be extracted from the respective engagement seats except by breaking them.

The cover 5 also has shaped protrusions 15 adapted to be inserted in holes 116 provided in the second modular component 101 to accommodate a means for associating with the supporting rail, generally designated by the reference numeral 117.

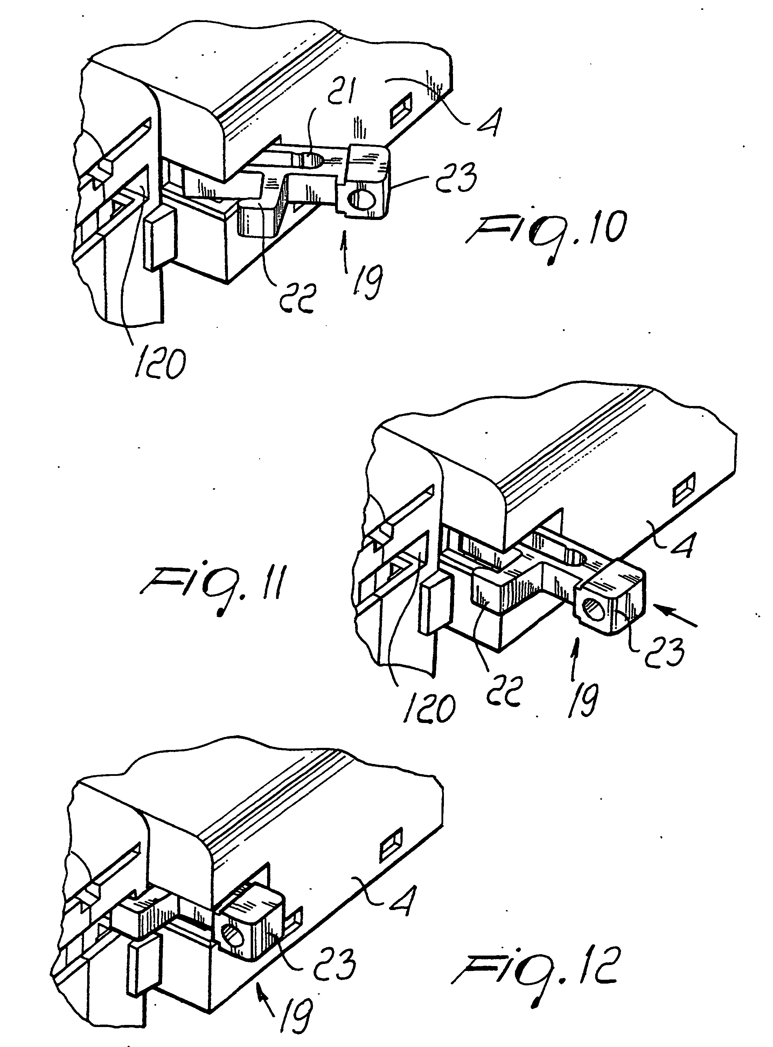

Hooks 18 and 19 are respectively rigidly coupled to the first modular component 1 and are adapted to engage respective seats 120 formed in the second modular component 101. Hook 19 comprises a slotted portion 21, associated with a fixed pivot (not shown) which is rigidly coupled to the body of the first modular component 1 so that the hook can slide and rotate with respect to the pivot, and a hook portion 22, which is adapted to enter the seat 120 of the second modular component 101, as shown more clearly in FIGS. 10-12.

The hook 19 has a perforated head 23 which, in the closed position of the cover 5, mates with a loop 24 which is rigidly coupled to the cover, so that it is possible to insert a lead-sealed wire as a further sealing device after assembly.

In order to prevent the first modular component from being associated with a second modular component which is not compatible, or vice versa, a keyed coupling means is provided by a shaped pin 26 which is formed on the first modular component 1 and is adapted to be inserted in a shaped seat 127 which is formed in the second modular component 101 when the two components are coupled. The pin 26, which can be formed monolithically with the body of the first modular component, has such a shape as to be coupled only to a corresponding seat 127 formed in the body of the second modular component.

In the illustrated example, the shaped pin 26 has a semicircular cross-section which can be orientated in four positions. The shaped seat 127 is constituted by a bush provided with an internal seat 130 which has a semicircular cross-section which corresponds to the cross-section of the shaped pin 26 and an external cross-section 129 which is at least partially quadrangular and is suitable to be inserted in a corresponding hole 128 which is at least partially quadrangular, so that the bush can be rigidly fixed in the body of the second modular component 101 only in four positions defined according to the type of modular component. In this manner it is possible to still have a single mold for all the types of modular component 101 and to modify the position of the bush 127, which can also be provided in a single type, without having to provide a different mold for each type of modular component 101. The position of the bush, which is inserted during the production of the modular component without the possibility of subsequent disassembly, determines the type of second modular component 101 that can be associated exclusively with the corresponding type of first modular component 1.

The operation of the device according to the invention is apparent from the foregoing description. The two modular components are moved mutually closer and the actuation pin 6 of the first component is inserted in the slot 107 of the second component in order to provide the operational connection between the two modules, which are rigidly associated with each other by means of the hooks 18 and 19, keeping the cover 5 in the open position.

After providing the electrical connections by inserting the conductors of the first module (not shown) in the terminals 131 of the second module, in a per se known manner, the customary tests of the correct operation of the device are performed and then the cover 5 is closed, making it slide longitudinally and inserting the plates 10 and the teeth 13 in the appropriately provided seats. In this manner, the cover 5 can no longer be opened to access the contacts without leaving evident traces of the tampering, typically the breakage of the teeth 13. As a further guarantee, it is possible to apply a wire sealed with lead to the loop 24 of the cover and to the head 23 of the hook 19.

In practice it has been found that the invention achieves the intended aim and objects, a safety connection device for modular electric devices having been provided which allows easy and rapid installation.

The device according to the invention is susceptible of numerous modifications and variations, all of which are within the scope of the inventive concept; all the details may furthermore be replaced with technically equivalent elements.

The materials used, as well as the dimensions, may of course be any according to the requirements and the state of the art.

## Claims

1. A safety connection device, particularly for modular electrical devices comprising a first electrical modul (1) to be associated with a second electrical module (101), each one of said first and second electrical modules being provided with at least one lateral surface (2) for mutual coupling, and a transverse surface (4) which comprises an electrical connection means, a cover (5) which is stably associated with said first electrical module at said transverse surface by a first engagement means (8) and has a second engagement (10,13) means which is adapted to fix said cover to the transverse surface of said second electrical module, said transverse surface of said second electrical module having seats (111,114) for accommodating said second engagement means (13), **characterized in that** said first engagement means comprises a sliding member (8) which is monolithic with said cover (5) and is adapted to slidingly enter a seat (9) formed in said first electrical module so as to determine at least two positions of said cover: an open position, in which said cover is at a distance from said first and second electrical modules, and a closed position, in which said cover is nonremovably fixed to said first and second electrical modules.

2. The device according to claim 1, **characterized in that** it comprises a second engagement means which comprises plate (10) formed monolithically with said cover and adapted to enter corresponding coupling seats (111) formed in the body of said second modular component (101) at seats which are adapted to accommodate respective terminals.

3. The device according to claim 1 or 2, **characterized in that** said second engagement means comprises teeth (13) which are rigidly coupled to said cover (5) and are adapted to engage corresponding engagement seats (114) formed in the body of the second modular (101) component so that once they have been engaged they cannot be extracted from the respective seats without breakage.

4. The device according to one or more of the preceding claims, **characterized in that** it comprises hooks (19) which are rigidly coupled to said first modular component (1) and are adapted to engage respective seats (120) formed in said second modular component (101).

5. The device according to claim 4, **characterized in that** at least one of said hooks (19) comprises a slotted portion (21), which is associated with a fixed pivot which is rigidly coupled to the body of said first modular component so that said hook can slide and rotate with respect to said fixed pivot, and a hook portion (22), which is adapted to enter a respective one of said seats (120) of said second modular component (101).

6. The device according to claim 4, **characterized in that** at least one of said hooks (19) comprises a perforated head (23) adapted to mate with a loop (24) which is rigidly coupled to said cover (5), at least in said closed position of said cover (5), in order to allow the application of a wire sealed with lead.

7. The device according to one or more of the preceding claims, **characterized in that** said sliding member (8) of said cover (5) has a longitudinal slot (32) adapted to be engaged by a protrusion (33) which is rigidly coupled to the body of said second modular component, at least in said closed position of said cover.

8. The device according to one or more of the preceding claims, **characterized in that** it comprises a keyed coupling means constituted by a shaped pin (26) which is associated with said first modular component (1) and is adapted to be inserted in a shaped seat (127) which is associated with said second modular component (101) in the position in which said two modular components are coupled, said shaped seat (127) being constituted by a bush whose internal cross-section is shaped complementarily to the cross-section of said shaped pin and an external cross-section (129) which is shaped complementarily to the cross-section of a seating hole (128) formed in said second modular component, so as to form univocal positions for the accommodation of said bush in said seating hole.

9. The device according to claim 8, **characterized in that** said cross-section of said shaped pin (26) and said internal cross-section of said bush are both semicircular.

10. The device according to claim 8, **characterized in that** said external cross-section of said bush is polygonal and allows the insertion of said bush in said seating hole (128) in discrete positions.

11. The device according to claim 8, **characterized in that** in order to avoid the mutual connection of incompatible modules said bush is closed and prevents the insertion of said pin (26).

## Patentansprüche

1. Sicherheitsverbindungsbauteil, insbesondere für modulare elektrische Bauelemente aufweisend ein erstes elektrisches Modul (1), welches mit einem zweiten elektrischen Modul (101) verbunden wird, wobei jedes des ersten und zweiten elektrischen Moduls mit wenigstens einer lateralen Oberfläche (2) zur gegenseitigen Verbindung ausgerüstet ist und einer quer verlaufenden Oberfläche (4), welche ein elektrisches Verbindungsmittel aufweist, einer Abdeckung (5), welche stabil mit dem ersten elektrischen Modul an der quer verlaufenden Oberfläche mittels eines ersten Befestigungsmittels (8) befestigt ist, und welches ein zweites Befestigungsmittel (10, 13) aufweist, welches geeignet ist, um die Abdeckung an der quer verlaufenden Oberfläche des zweiten elektrischen Moduls zu befestigen, wobei die quer verlaufende Oberfläche des zweiten elektrischen Moduls Sitze (111, 114) zur Aufnahme des zweiten Befestigungselements (13) aufweist, **dadurch gekennzeichnet, daß** das erste Befestigungsmittel ein Gleitelement (8) aufweist, welches monolithisch mit der Abdeckung (5) ist und ausgebildet ist, um gleitend in einen Sitz, ausgebildet in dem ersten elektrischen Modul, einzufahren, so daß wenigstens zwei Positionen der Abdeckung bestimmt werden: eine offene Position, in welcher die Abdeckung distanziert ist von dem ersten und dem zweiten elektrischen Modul und eine geschlossenen Position, in welcher die Abdeckung nicht entfernbar an dem ersten und zweiten elektrischen Modul fixiert ist.

2. Vorrichtung gemäß Anspruch 1, **dadurch gekennzeichnet, daß** diese eine zweite Verbindungsvorrichtung aufweist, welche monolithisch mit der Abdeckung geformte Platten (10) aufweist und so angepaßt ist, daß diese in die im Körper der zweiten modularen Komponente (101) an den Sitzen, welche zur Aufnahme entsprechender Reihenklemmen geeignet sind, korrespondierenden Kupplungssitze (111) eingleiten können.

3. Vorrichtung gemäß Anspruch 1 oder 2, **dadurch gekennzeichnet, daß** die zweite Aufnahmevorrichtung Zähne (13) aufweist, welche fest mit der Abdeckung (5) verbunden sind und geeignet sind, in die korrespondierenden Eingreifsitze (114), ausgebildet im Körper der zweiten modularen Komponente (101), einzugreifen, so daß sie, nachdem sie einmal eingegriffen haben, nicht mehr von den entsprechenden Sitzen entfernt werden können, ohne diese zu zerbrechen.

4. Vorrichtung gemäß einem oder mehreren der vorangegangenen Ansprüche, **dadurch gekennzeichnet, daß** sie Haken (19) aufweist, welche fest mit der ersten modularen Komponente (1) verbunden sind und geeignet sind, in die entsprechenden Sitze (120), welche in der zweiten modularen Komponente (101) ausgebildet sind, einzugreifen.

5. Vorrichtung gemäß Anspruch 4, **dadurch gekennzeichnet, daß** wenigstens ein Haken (19) einen Schlitzabschnitt (21) aufweist, welcher mit einem fixierten Stift verknüpft ist, welcher fest mit dem Körper der ersten modularen Komponente verbunden ist, so daß der Haken eingleiten und hinsichtlich des fixierten Stifts rotieren kann, und einen Hakenabschnitt (22), welcher geeignet ist, in einen der entsprechenden Sitze (120) der zweiten modularen Komponente (101) einzugleiten.

6. Vorrichtung gemäß Anspruch 4, **dadurch gekennzeichnet, daß** wenigstens einer der Haken (19) einen perforierten Kopf (23) aufweist, der geeignet ist, wenigstens in der geschlossenen Position der Abdeckung (5) mit einer Schlaufe (24) verbunden zu werden, welche fest mit der Abdeckung (5) verbunden ist, um die Anbringung eines mit Blei versiegelten Drahtes zu ermöglichen.

7. Vorrichtung gemäß einem oder mehreren der vorhergehenden Ansprüche, **dadurch gekennzeichnet, daß** das Gleitelement (8) der Abdeckung (5) einen longitudinalen Schlitz (32) aufweist, welcher wenigstens in der geschlossenen Position geeignet ist, mit einem Vorsprung (33), welcher fest mit dem Körper der zweiten modularen Komponente verbunden ist, verbunden zu werden.

8. Vorrichtung gemäß einem oder mehreren der vorhergehenden Ansprüche, **dadurch gekennzeichnet, daß** sie ein verkeiltes Kupplungselement, gebildet aus einem geformten Stift (26), welcher mit der ersten modularen Komponente (1) verbunden ist und geeignet ist in einen geformten Sitz-(127), welcher mit der zweiten modularen Komponente (101) in der Position, in der die beiden modularen Komponenten gekoppelt sind, einzugreifen, wobei der geformte Sitz (27) aus einer Büchse, deren innerer Querschnitt komplementär zur Querschnitt des Stifts geformt ist und dessen äußerer Querschnitt (129) komplementär zum Querschnitt des Sitzlochs (128) der zweiten modularen Komponente geformt ist, so daß diese eine eindeutige Position zur Aufnahme der Büchse in dem Sitzloch bilden.

9. Vorrichtung gemäß Anspruch 8, **dadurch gekennzeichnet, daß** der Querschnitt des geformten Nagels (26) und der innere Querschnitt der Büchse jeweils halbkreisförmig sind.

10. Vorrichtung gemäß Anspruch 8, **dadurch gekennzeichnet, daß** der äußere Querschnitt der Büchse polygonal ist und die Einführung der Büchse in das Sitzloch (128) in getrennten Positionen erlaubt.

11. Vorrichtung gemäß Anspruch 8, **dadurch gekennzeichnet, daß**, um gegenseitigen Kontakt von inkompatiblen Modulen zu verhindern, die Büchse geschlossen ist und eine Einführung des Stifts (26) verhindert.

## Revendications

1. Dispositif de liaison de sécurité, en particulier pour des dispositifs électriques modulaires comprenant un premier module électrique (1) destiné à être associé à un deuxième module électrique (101), chacun desdits premier et deuxième modules électriques étant pourvu d'au moins une surface latérale (2) pour un couplage mutuel, et d'une surface transversale (4) qui comprend des moyens de connexion électrique, un couvercle (5) qui est associé de manière stable audit premier module électrique au niveau de ladite surface transversale par un premier moyen de prise (8), et comporte un deuxième moyen de prise (10, 13) qui est conçu pour fixer ledit couvercle sur la surface transversale dudit deuxième module électrique, ladite surface transversale dudit deuxième module électrique comportant des sièges (111, 114) pour recevoir ledit deuxième moyen de prise, **caractérisé en ce que** ledit premier moyen de prise (10) comprend un élément coulissant (8) qui est monolithique avec ledit couvercle (5) et est conçu pour pénétrer par coulissement dans un siège (9) formé dans ledit premier module électrique de manière à déterminer au moins deux positions dudit couvercle : une position ouverte, dans laquelle ledit couvercle se trouve à une certaine distance desdits premier et deuxième modules électriques, et une position fermée, dans laquelle ledit couvercle est fixé de manière non amovible auxdits premier et deuxième modules électriques.

2. Dispositif selon la revendication 1, **caractérisé en ce qu'**il comprend un deuxième moyen de prise qui comprend des plaques (10) formées de manière monolithique avec ledit couvercle, et conçues pour pénétrer dans des sièges de couplage (111) correspondants formés dans le corps dudit deuxième composant modulaire (101) au niveau des sièges qui sont conçus pour loger les bornes respectives.

3. Dispositif selon l'une quelconque des revendications 1 ou 2, **caractérisé en ce que** ledit deuxième moyen de prise comprend des dents (13) qui sont couplées rigidement audit couvercle (5) et sont conçues pour venir en prise avec des sièges de prise (114) correspondants formés dans le corps du deuxième composant modulaire (101), de telle sorte qu'une fois mises en prise, elles ne peuvent pas être extraites des sièges respectifs sans rupture.

4. Dispositif selon une ou plusieurs des revendications précédentes, **caractérisé en ce qu'**il comprend des crochets (19) qui sont couplés rigidement audit premier composant modulaire (1) et sont conçus pour venir en prise avec des sièges (120) respectifs formés dans ledit deuxième composant modulaire (101).

5. Dispositif selon la revendication 4, **caractérisé en ce qu'**au moins un desdits crochets (19) comprend une partie fendue (21) qui est associée à un pivot fixe, lequel est rigidement couplé au corps dudit premier composant modulaire, de telle sorte que ledit crochet peut coulisser et pivoter par rapport audit pivot fixe, et une partie de crochet (22), qui est conçue pour pénétrer dans l'un respectif desdits sièges (120) dudit deuxième composant modulaire.

6. Dispositif selon la revendication 4, **caractérisé en ce qu'**au moins un desdits crochets (19) comprend une tête (23) perforée conçue pour correspondre à une boucle (24) qui est rigidement couplée audit couvercle (5), au moins dans ladite position fermée dudit couvercle (5), afin de permettre l'application d'un fil plombé.

7. Dispositif selon une ou plusieurs des revendications précédentes, **caractérisé en ce que** ledit élément coulissant (8) dudit couvercle (5) comporte une fente longitudinale (32) conçue pour venir en prise avec une saillie (33) qui est rigidement couplée avec le corps dudit deuxième composant modulaire, au moins dans ladite position fermée dudit couvercle.

8. Dispositif selon une ou plusieurs des revendications précédentes, **caractérisé en ce qu'**il comprend des moyens de couplage clavetés constitués d'une broche profilée (26) qui est associée audit premier composant modulaire (1) et est conçue pour être insérée dans un siège profilé (127) qui est associé audit deuxième composant modulaire (101) dans la position dans laquelle lesdits deux composants modulaires sont couplés, ledit siège profilé (127) étant constitué d'une douille dont la section transversale interne présente une forme complémentaire de la section transversale de ladite broche profilée, et une section transversale externe (129) qui présente une forme complémentaire de la section transversale d'un trou de logement (128) formé dans ledit deuxième composant modulaire, de manière à former des positions uniques pour loger ladite douille dans ledit trou de logement.

9. Dispositif selon la revendication 8, **caractérisé en ce que** ladite section transversale de ladite broche profilée (26) et ladite section transversale interne de ladite douille sont toutes deux semi-circulaires.

10. Dispositif selon la revendication 8, **caractérisé en ce que** ladite section transversale externe de ladite douille est polygonale et permet d'insérer ladite douille dans ledit trou de logement (128) dans des positions discrètes.

11. Dispositif selon la revendication 8, **caractérisé en ce que**, pour éviter la liaison mutuelle entre des modules incompatibles, ladite douille est fermée et empêche l'insertion de ladite broche (26).
